# EUROPEAN PATENT APPLICATION

(11) **EP 3 672 030 A1**
(43) Date of publication of application: **24.06.2020**
(21) Application number: 18214590.4
(22) Date of filing: 20.12.2018
(51) Int. Cl.: H02K 5/128, H02K 1/18, F16K 31/04, F25B 41/06

(54) **VALVE, IN PARTICULAR EXPANSION VALVE**

(71) Applicant: Danfoss A/S, 6430 Nordborg (DK)
(72) Inventor: LARSEN, Sigurd, 6430 Nordborg (DK); VAGNSHOLDT, Charlotte Vibeke Pingel, 6430 Nordborg (DK)
(74) Representative: Stevens, Brian

(57) **Abstract**

Valve (1), in particular expansion valve, is described comprising a valve element driven by an actuator and being arranged in a valve housing arrangement (4, 5, 15), wherein the valve housing arrangement (4, 5, 15) comprises a housing (4), a tube (15) connected to the housing (4) and at least one connector (5) extending from the housing (4), wherein the actuator comprises a rotary motor having a stator and a rotor, the rotor being arranged inside the tube (15) and the stator being arranged outside the tube (15).

A simple way is needed to position the stator and the rotor relative to each other.

To this end the stator is fixed to a stator holder (16) which is arranged around the tube (15) and connected to the housing arrangement (4, 5, 15).

## Description

The present invention relates to a valve, in particular an expansion valve, comprising a valve element driven by an actuator and being arranged in a valve housing arrangement, wherein the valve housing arrangement comprises a housing, a tube connected to the housing and at least one connector extending from the housing, wherein the actuator comprises a rotary motor having a stator and a rotor, the rotor being arranged inside the tube and the stator being arranged outside the tube.

Such a valve can be used, for example, to control a flow of a refrigerant in a cooling or refrigerating system. In such a system the escape of the refrigerant to the environment must be prevented. To this end the tube is provided. The tube seals a space inside the valve which can be filled with refrigerant, to the outside.

In order to cause a movement of the valve element the motor is supplied with electrical energy. A magnetic field is produced which is transmitted from the stator to the rotor via the tube. In this way the tube can be used for sealing without disturbing the transfer of driving energy from the stator to the rotor.

Such a construction has, however, the draw back that the stator and the rotor have to be positioned relatively to each other without a direct connection.

The object underlying the invention is to have a simple way to position stator and rotor of such a valve relative to each other.

This object is solved with a valve as described at the outset in that the stator is fixed to a stator holder which is arranged around the tube and connected to the housing arrangement.

The stator holder can be pushed onto the tube and defines the axial and rotational position of the stator relative to the rotor with rather small tolerances. To this end it is preferable that the rotor is supported in at least one bearing which is fixed in the tube. Since the stator holder is fixed to the housing as well, i. e. to a part other than the tube, the axial position of the stator relative to the rotor is fixed as well. In this way the correct position of the stator relative to the rotor can be secured.

In an embodiment of the invention the stator holder is connected to the housing arrangement by means of a snap connection arrangement comprising at least one snap connection. The stator holder can simply be snapped-on the housing to fix the stator relative to the rotor.

In an embodiment of the invention the stator holder comprises a recess and the connector is arranged within the recess. In this way a torque arm is provided securing the stator holder and accordingly the stator against rotation around the tube. The connector holds the stator holder reliably in a predetermined angular position.

In an embodiment of the invention the recess comprises a form adapted to a contour of the connector. Accordingly, a tight connection between the connector and the recess can be made minimizing a play of the stator holder and the housing in circumferential direction.

In an embodiment of the invention the connector comprises at least in a region extending from the housing a cylindrical cross section and the recess comprises at least partly a circular form. When the circular form of the recess is adapted to the diameter of the cylindrical cross section a very tight connection between the recess and the connector can be made.

In an embodiment of the invention the stator holder comprises a plurality of recesses, the recesses being arranged around a rotational axis of the rotor. It is, for example, possible to use four recesses. During mounting there is the possibility to mount the stator holder in four different angular orientations with respect to the housing arrangement, more precisely with respect to the connector. The drive of the valve can then be adapted to the mounting situation of the valve within a pipe system.

In an embodiment of the invention the recess together with the connector forms part of the snap connection arrangement. When the stator holder is pushed onto the tube the recess can be pushed around the connector. To this end it is necessary that the recess is open in the direction of pushing. However, this can be realized without larger problems.

In an embodiment of the invention the recess is limited by two elastically deformable members. These members which can also be termed "legs" can be deflected outwardly when the stator holder is pushed onto the tube. Once the recess is in place, the legs spring back and the stator holder is fixed to the housing arrangement.

In an embodiment of the invention the stator holder comprises at least one hook member on a side of the housing remote from the tube. the hook member secures against forces trying to withdraw the stator holder from the tube.

In an embodiment of the invention the hook member snaps behind the housing before the recess snaps around the connector. Accordingly, it can be guaranteed that both snap connections have snapped in when the stator holder has been moved into the final position.

An embodiment of the invention will now be described in more detail with reference to the drawing, wherein:
- Fig. 1: shows schematically a sectional view of a valve,
- Fig. 2: shows a sideview of the valve,
- Fig. 3: shows a sectional view C-C according to Fig. 2,
- Fig. 4: shows a bottom view of the valve and
- Fig. 5: shows a perspective view of a stator holder.

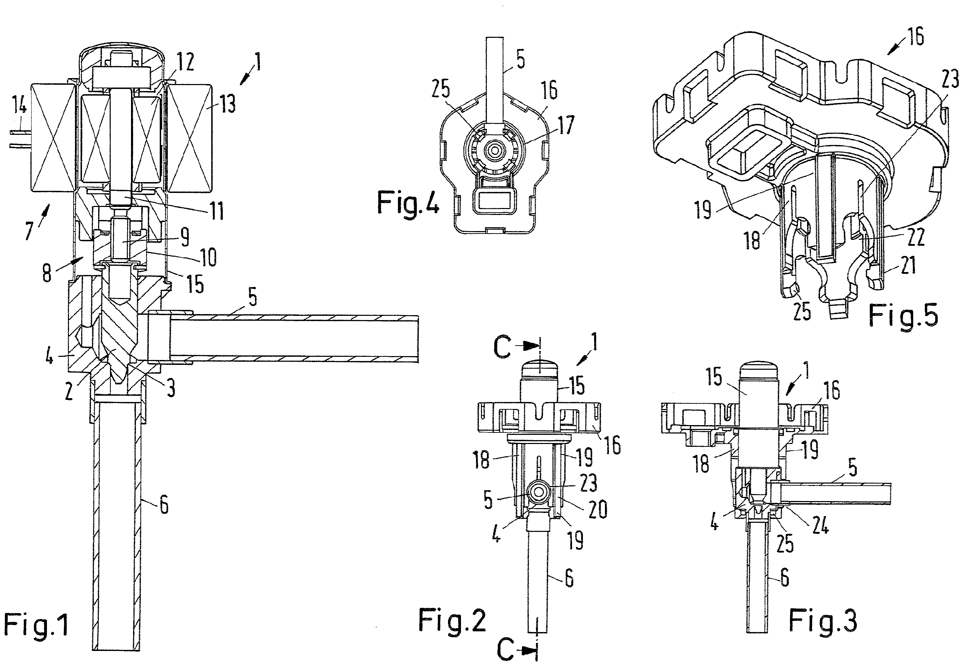

Fig. 1 shows schematically a valve 1 in form of an expansion valve comprising a valve element 2 cooperating with a valve seat 3. The valve seat 3 is formed in a housing 4. Two connectors 5, 6 extend from the housing 4. The valve element 2 is movable within the housing 4. One connector 5 extends perpendicular to the moving direction of the valve element 2 and the other connector 6 extends parallel to the moving direction of the valve element 2.

The valve element is driven by a rotary motor 7 via a transmission 8 comprising a lead screw 9 and a lead nut 10. The lead nut 10 is connected to the valve element 2.

The lead screw 9 is connected to a shaft 11 of a rotor 12 which is part of the rotary motor 7. The rotary motor 7 comprises as well a stator 13 and electrical connectors 14.

The rotor 12 is arranged inside a tube 15. The tube 15 is connected to the housing 4, for example by welding. The housing 4, the connector 5 and the tube 15 together form a housing arrangement. The stator 13 is arranged outside the tube 15.

The stator 13 of the motor 7 must be precisely positioned in respect to the rotor 12. To this end a stator holder 16 is provided which is shown in Fig. 2 to 5 without stator. Fig. 1 shows the valve 1 without stator holder 16. The fixation of the stator 13 to the stator holder 16 can be realized in many different ways. It is, for example, possible to mould the stator holder 16 onto the stator 13 or to use fixation elements.

The stator holder 16 comprises a bore which is adapted to the tube 15, i. e. the stator holder 16 can be pushed onto the tube 15. The bore is surrounded by a shell 18. The shell 18 comprises a first section 19 surrounding the tube 15 and a second section 20 in the region of the housing 4. The second section 20 comprises four elastically deformable members 21 which can briefly be termed "legs". Each pair of elastically deformable members 21 delimit a recess 22. The recess 22 continues into a slot 23 in the first section 19. Furthermore, the recess 22 is open at the side opposite to the slot 23.

The recess 22 is of circular form over more than 180°. The connector 5 is at least in a region 24 adjacent to the housing 4 of cylindrical form, so that the recess 22 can snap over the connector 5 once the stator holder 16 is in the correct position.

Furthermore, the elastically deformable members 21 each comprise a hook member 25 which can snap behind the housing 4. The hook members 25 snap behind the housing 4 before the recess snaps around the connector 5.

As it is shown, in particular in Fig. 5, four recesses 22 are provided which are distributed evenly in circumferential direction. Accordingly, the stator holder 16 can be mounted onto the tube 15 in for different angular positions, wherein the different angular positions differ from each other by 90°.

Once the stator holder 16 has been mounted, two snap connections have been snapped in. The first snap connection is formed by the recess 22 and the connector 5. The second snap connection is provided by the hook elements 25 and the housing 4. The last-mentioned snap connection secures the stator holder 16 on the housing arrangement against pulling forces trying to pull the stator holder 16 away from the valve housing 4.

The other snap connection formed by the recess 22 and the connector 5 has basically two functions: it secures the stator holder 16 against a rotational movement relative to the tube 15, i. e. it forms a torque arm. Furthermore, it secures the correct positioning of the stator holder 16 in axial direction, so that the stator 13 can be arranged in correct alignment with the rotor 12 in order to transfer the maximum torque from the stator 13 to the rotor 12. In addition, the snap recess 22 grips sufficiently around the connector 5, so that it produces likewise a holding force securing the stator holder 16 on the housing arrangement against forces trying to pull the stator holder 16 from the tube 15. The elastically deformable members 21 are dimensioned such that they can be deformed during the mounting process, but cannot be deformed by a torque generated by the motor 7. In other words, the side walls of the recess 22 can produce a sufficiently large reaction torque to take up the torque by the motor 7 during operation.

## Claims

1. Valve (1), in particular expansion valve, comprising a valve element (2) driven by an actuator and being arranged in a valve housing arrangement (4, 5, 15), wherein the valve housing arrangement (4, 5, 15) comprises a housing (4), a tube (15) connected to the housing and at least one connector (5) extending from the housing (4), wherein the actuator comprises a rotary motor (7) having a stator (13) and a rotor (12), the rotor (12) being arranged inside the tube (15) and the stator being arranged outside the tube (15), **characterized in that** the stator (13) is fixed to a stator holder (16) which is arranged around the tube (15) and connected to the housing arrangement (4, 5, 15).

2. Valve according to claim 1, **characterized in that** the stator holder (16) is connected to the housing arrangement (4, 5, 15) by means of a snap connection arrangement comprising at least one snap connection.

3. Valve according to claim 2, **characterized in that** the stator holder (16) comprises a recess (22) and the connector (5) is arranged within the recess (22).

4. Valve according to claim 3, **characterized in that** the recess (22) comprises a form adapted to a contour of the connector (5).

5. Valve according to claim 4, **characterized in that** the connector (5) comprises at least in a region (24) extending from the housing (4) a cylindrical cross section and the recess (22) comprises at least partly a circular form.

6. Valve according to any of claims 2 to 5, **characterized in that** the stator holder (16) comprises a plurality of recesses (22), the recesses (22) being arranged around a rotational axis of the rotor (12).

7. Valve according to any of claims 3 to 6, **characterized in that** the recess (22) together with the connector (5) forms part of the snap connection arrangement.

8. Valve according to any of claims 3 to 7, **characterized in that** the recess (22) is limited by two elastically deformable members (21).

9. Valve according to any of claims 1 to 8, **characterized in that** stator holder (16) comprises at least one hook member (25) on a side of the housing (4) remote from the tube (15).

10. Valve according to claim 9, **characterized in that** the hook member (25) snaps behind the housing (4) before the recess (22) snaps around the connector (5).
